# EUROPÄISCHE PATENTANMELDUNG

(11) **EP 2 026 256 A1**
(43) Veröffentlichungstag der Anmeldung: **18.02.2009**
(21) Anmeldenummer: 07015808.4
(22) Anmeldetag: 10.08.2007
(51) Int. Cl.: G06Q 10/00

(54) **Verfahren zur Bestellung von Ersatzteilen und/oder Dienstleistungen zur Wartung eines Gerätes und/oder zur Bestellung von einem Gerät zugeordneten Verbrauchsmaterialien**

(71) Anmelder: SkiData AG, 5083 Grödig/Salzburg (AT)
(72) Erfinder: Ponert, Gregor, A-5020 Salzburg (AT); Aigner, Roland, A-5400 Hallein (AT)
(74) Vertreter: Haft, von Puttkamer, Berngruber

(57) **Zusammenfassung**

Es wird ein Verfahren zur Bestellung von Ersatzteilen und/oder Dienstleistungen zur Wartung eines Gerätes und/oder zur Bestellung von einem Gerät zugeordneten Verbrauchsmaterialien vorgeschlagen, im Rahmen dessen gerät- und/oder verbrauchsmaterialienspezifische Informationen mittels eines RFTD-Labels in Form eines automatisch oder nach einer Bestätigung des Benutzers in einem zur mobilen Kommunikation geeigneten RFID-fähigen Gerät des Benutzers aktivierbaren Internetlinks an ein zur mobilen Kommunikation geeignetes RFID-fähiges Gerät übermittelt werden, wobei die Inhalte der dem Internetlink entsprechenden Internetseite von den vom RFID-Label gelieferten Informationen abhängen und eine Online-Bestellung von Ersatzteilen und/oder Dienstleistungen zur Wartung eines Gerätes und/oder die Online-Bestellung von einem Gerät zugeordneten Verbrauchsmaterialien ermöglichen.

## Beschreibung

Die vorliegende Erfindung bezieht sich auf ein Verfahren zur Bestellung von Ersatzteilen und/oder Dienstleistungen zur Wartung eines Gerätes und/oder zur Bestellung von einem Gerät zugeordneten Verbrauchsmaterialien gemäß dem Oberbegriff des Patentanspruchs 1.

Aus dem Stand der Technik ist bekannt, RFID-Technologie zur Bereitstellung von Informationen auf einem mobilen Kommunikationsgerät, insbesondere ein Mobiltelefon zu verwenden. Beispielsweise ist im Rahmen der EP 1622346 A1 ein Verfahren bekannt, bei dem das mobile Kommunikationsgerät eine RFID-Lesevorrichtung aufweist, wobei anhand der empfangenen RFID-Informationen durch eine Menüführung weitere Informationen über eine Netzwerkschnittstelle des Kommunikationsgerätes angefordert werden. Hierbei ist vorgesehen, dass die Menüführung durch den Inhalt der RFID-Informationen dynamisch vorgegeben wird. Die EP 1622346 A1 beschreibt zudem eine Möglichkeit zur Bestellung und Bezahlung eines ein RFID-Label aufweisenden Gegenstandes. Die Angaben des RFID-Labels beziehen sich auf das spezifische zu bestellende Produkt, auf dem das RFID-Label angebracht ist und sind so individuell wie ein Fingerprint.

Eine Möglichkeit zur Bestellung von Ersatzteilen und/oder Verbrauchsmaterialien eines Gerätes und/oder Dienstleistungen zur Wartung eines Gerätes mittels berührungsloser Technologie und RFID-Labels ist aus dem Stand der Technik nicht bekannt.

Im Alltag gibt es immer wieder Situationen, wo ein derartiges Verfahren sehr hilfreich sein kann. Beispielsweise umfasst heutzutage die Bestellung von Verbrauchsmaterialien für einen Drucker und insbesondere die Bestellung von Toner bzw. Druckerpatronen den Schritt des Lesens der Bedienungsanleitung, um die Bezeichnung der Ersatzteile bzw. des zu verwendeten Toners zu entnehmen sowie des Weiterleitens dieser Informationen an das zuständige Fachgeschäft, was schriftlich oder telefonisch erfolgt. Diese Vorgehensweise ist in nachteiliger Weise sehr zeitaufwändig; des weiteren besteht hierbei auch die Möglichkeit, nicht Originalersatzteile, sondern "no name"-Produkte zu bestellen, was unter Umständen die Funktionsweise des Gerätes negativ beeinträchtigt.

Der vorliegenden Erfindung liegt daher die Aufgabe zugrunde, ein Verfahren zur Bestellung von Ersatzteilen und/oder Dienstleistungen zur Wartung eines Gerätes und/oder zur Bestellung von einem Gerät zugeordneten Verbrauchsmaterialien anzugeben, durch dessen Durchführung die Bestellung und optional die Abwicklung der mit der Bestellung verbundenen finanziellen Transaktion vereinfacht und beschleunigt wird.

Diese Aufgabe wird durch die Merkmale des Patenanspruchs 1 gelöst. Weitere erfindungsgemäße Ausgestaltungen und Vorteile gehen aus den Unteransprüchen hervor.

Demnach wird im Rahmen des erfindungsgemäßen Verfahrens vorgeschlagen, die RFID-Technologie zu nutzen, um die Bestellung von Ersatzteilen und/oder Dienstleistungen zur Wartung eines Gerätes und/oder die Bestellung von einem Gerät zugeordneten Verbrauchsmaterialien durchzuführen, wobei gerät- und/oder verbrauchsmaterialienspezifische Informationen mittels eines RFID-Labels in Form eines Internetlinks an ein zur mobilen Kommunikation geeignetes RFID-fähiges Gerät, vorzugsweise ein Mobiltelefon, übermittelt werden.

Die Erfindung wird im folgenden anhand der NFC - Technologie beschrieben, wobei anstelle der NFC-Technologie jede geeignete RFID - Technologie verwendet werden kann (NFC - Technologie steht für Near-Field-Communication - Technologie, die bekannterweise eine auf RFID-Funktechnologie basierende Funktechnologie für kurze Distanzen ist).

Gemäß der Erfindung wird bei einer ausreichend kleinen Distanz zwischen einem Mobiltelefon und einem NFC-Label an das Mobiltelefon ein Internetlink übermittelt und vorzugsweise automatisch aktiviert, sodass eine Internetverbindung (online Verbindung) zwischen dem Mobiltelefon des Benutzers und der dem Link entsprechenden Internetseite hergestellt wird. Die Inhalte der dem Internetlink entsprechenden Internetseite hängen von den vom NFC-Label gelieferten Informationen ab und ermöglichen eine Online-Bestellung von Ersatzteilen und/oder Dienstleistungen zur Wartung eines Gerätes und/oder die Online-Bestellung von einem Gerät zugeordneten Verbrauchsmaterialien. Hierbei ist die dem Internetlink entsprechende Internetseite eine Internetseite des Herstellers des Gerätes bzw. des für die Wartung zuständigen Betriebs bzw. des Lieferanten der Ersatzteile oder Verbrauchsmaterialien.

Optional kann vorgesehen sein, dass die Bezahlung der bestellten Waren und/oder Dienstleistungen online, z.B. durch die Übermittlung von Kreditkartendaten erfolgt. Im Rahmen einer vorteilhaften Variante des erfindungsgemäßen Verfahrens ist vorgesehen, dass die Inhalte des Internetlinks in Abhängigkeit von den NFC-Label-Informationen personalisiert ausgeführt sind, sodass die Benutzerinformationen nicht eingegeben werden müssen.

Im Rahmen einer weiteren vorteilhaften Ausgestaltung der Erfindung wird vorgeschlagen, die NFC-Labels, welche einem Gerät oder dem Gerät zugeordnete Verbrauchsmaterialien oder Dienstleistungen entsprechen, nicht nur am Gerät direkt, sondern zusätzlich oder alternativ dazu an einer Karte oder an einem anderen geeigneten Informationsträger anzubringen.

Beispielsweise kann dadurch Verbrauchsmaterial für einen Drucker bestellt werden, indem der Benutzer sein Mobiltelefon an eine scheckkartenähnliche Karte hält, auf der NFC-Labels für das benötigte Papier oder den benötigten Toner angebracht sind.

Die Erfindung wird im folgenden anhand mehrerer Beispiele erläutert.

Beispielsweise kann an einer Kaffeemaschine ein NFC-Label angebracht sein, wobei das NFC-Label einen Internetlink auf eine Interseite des Lieferanten oder Herstellers von Kaffeekapseln oder Kaffeepads enthält.

Des weiteren kann das NFC-Label eine Seriennummer des Gerätes enthalten und diese bei der Herstellung der Internetverbindung zwischen dem Mobiltelefon und dem Hersteller oder Lieferanten mitliefern, wodurch der Benutzer bzw. der Eigentümer der Kaffeemaschine und/oder die Art der geeigneten Kaffepads oder Kaffeekapseln eindeutig identifizierbar ist. Durch Aktivieren des Internetlinks, was automatisch oder durch eine entsprechende Eingabe bzw. Bestätigung des Benutzers erfolgen kann, wird eine Internetverbindung zwischen dem Mobiltelefon des Benutzers und der Internetseite des Herstellers oder Lieferanten hergestellt.

Für den Fall, dass der Benutzer anhand der Gerätseriennummer identifiziert werden kann, kann vorgesehen sein, dass die Internetseite seine letzten Bestellungen bzw. die von ihm am meisten bestellte Kaffeesorte oder die bestellbaren Kaffeesorten anzeigt, was eine erneute Bestellung erleichtert. Die Anschrift des Benutzers (bzw. die Lieferanschrift) wird vorzugsweise anhand der Geräteseriennummer ermittelt; um die Sicherheit einer Online-Transaktion zu erhöhen, reicht es, wenn der Benutzer seine Bank und/oder Kreditkarteninformationen einmal online oder beim Kauf des Geräts angibt. Nach Abschluss der Bestellung und der damit verbundenen Transaktion ist im Rahmen einer Weiterbildung der Erfindung vorgesehen, dass der Benutzer eine Bestätigung der Bestellung und/oder der Transaktion in Form einer SMS auf sein Mobiltelefon oder einer Email erhält.

Um eine Bestellung durchzuführen, ist es gemäß der vorliegenden Erfindung nicht erforderlich, dass der Benutzer sein Handy an ein an der Kaffeemaschine angebrachtes NFC-Label hält; um dem Benutzer die Möglichkeit zu geben, unabhängig von seinem Standort die Kaffeekapseln oder Kaffeepads zu bestellen, ist es besonders vorteilhaft, wenn das entsprechende NFC-Label nicht nur an der Kaffeemaschine, sondern zusätzlich oder alternativ dazu an einem Informationsträger, der vorzugsweise die Form einer Scheck- oder Kreditkarte aufweist, angebracht ist. Hierbei kann die Karte als Club-Karte ausgeführt sein, die der Benutzer beim Kauf der Kaffeemaschine vom Lieferanten erhält, wobei anhand der von dem zumindest einen auf der Karte angebrachten NFC-Label übertragenen Informationen der Benutzer identifiziert werden kann und seine optional abgelegten Konto- oder Kreditkarten Daten zur Bezahlung der bestellten Kaffeepads oder Kaffeekapseln verwendet werden können.

Ein weiterer Vorteil dieser Konzeption besteht darin, dass ein möglicher Missbrauch des an der Kaffeemaschine angebrachten NFC-Labels, beispielsweise durch unerwünschte Bestellungen vermieden wird. Erfindungsgemäß können auf dem Informationsträger nicht nur ein NFC-Label, sondern mehrere NFC-Labels angebracht sein. Diese NFC-Labels können unterschiedlichen Geräten zugeordnet sein, beispielsweise einer Kaffeemaschine und einem Drucker.

Analog zu der Vorgehensweise bei einer Kaffeemaschine ist es möglich, durch ein NFC-Label und dessen Interaktion mit einem NFC-fähigen Mobiltelefon Verbrauchsmaterialien oder Ersatzteile für ein beliebiges Gerät, z.B. für einen Drucker, ein Faxgerät und dergleichen zu bestellen, wie beispielsweise Toner und Papier. Wie bereits erläutert, wird dadurch die heutzutage aufwändige Bestellung dieser Materialien erheblich vereinfacht.

Mittels des erfindungsgemäßen Verfahrens können auch gerätebezogene Dienstleistungen bestellt werden, insbesondere Dienstleistungen zur Wartung eines Gerätes. In diesem Zusammenhang enthält das NFC-Label, welches am Gerät oder an einem separaten Informationsträger angebracht ist, die Seriennummer des Gerätes, sowie weitere wartungsrelevante Daten, sodass über die Aktivierung des entsprechenden Links im Mobiltelefon des Benutzers der zuständige Kundenservice über die Art, das Alter sowie weitere relevante Daten des Gerätes informiert werden kann.

Das erfindungsgemäße Verfahren kann auch in einem Haushalt zur Anwendung kommen. Beispielsweise können auf der Außenseite der Kühlschranktür (oder auf einer separaten Informationsträger bzw. einer Karte) NFC-Labels angebracht sein, welche jeweils einem Lebensmittel wie Milch, Butter, etc. entsprechen. Durch Aktivierung der in den NFC-Labeln enthaltenen Links wird eine Internetverbindung zum Lieferanten dieser Produkte hergestellt und eine Bestellung und Zahlung, wie bereits erläutert, ermöglicht (der Lieferant kann z. B. ein Supermarkt oder ein Lieferservice sein).

Durch das erfindungsgemäße Verfahren ist es zudem möglich, Ersatzteile eines Gerätes in einfacher Weise zu bestellen, auch wenn man die Ersatzteile als Laie nicht eindeutig beschreiben oder zuordnen kann. Zu diesem Zweck können auf den Bauteilen eines Gerätes oder einer Maschine, welche einem erhöhten Verschleiß ausgesetzt sind, NFC-Labels angebracht sein, durch deren Aktivierung eine Seriennummer des benötigten Ersatzteils über eine Online-Verbindung mittels des Mobiltelefons des Benutzers dem Hersteller oder Lieferanten mitgeteilt werden kann. Beispielsweise ist es dadurch möglich, Ersatzzahnbürstenköpfe für elektrische Zahnbürsten zu bestellen. In analoger Anwendung können entsprechende NFC-Labels an Ersatzteilen von Computern, Automotoren, Industriemaschinen, Zugangskontrolleinrichtungen angebracht sein, um eine schnelle und exakte Bestellung der benötigten Ersatzteile zu gewährleisten.

## Patentansprüche

1. Verfahren zur Bestellung von Ersatzteilen und/oder Dienstleistungen zur Wartung eines Gerätes und/oder zur Bestellung von einem Gerät zugeordneten Verbrauchsmaterialien, **dadurch gekennzeichnet, dass** gerät- und/oder verbrauchsmaterialienspezifische Informationen mittels eines RFID-Labels in Form eines automatisch oder nach einer Bestätigung des Benutzers in einem zur mobilen Kommunikation geeigneten RFID-fähigen Gerät des Benutzers aktivierbaren Internetlinks an ein zur mobilen Kommunikation geeignetes RFID-fähiges Gerät übermittelt werden, wobei die Inhalte der dem Internetlink entsprechenden Internetseite von den vom RFID-Label gelieferten Informationen abhängen und eine Online-Bestellung von Ersatzteilen und/oder Dienstleistungen zur Wartung eines Gerätes und/oder die Online-Bestellung von einem Gerät zugeordneten Verbrauchsmaterialien ermöglichen und wobei die dem Internetlink entsprechende Internetseite eine Internetseite des Herstellers des Gerätes bzw. des für die Wartung zuständigen Betriebs bzw. des Lieferanten der Ersatzteile oder Verbrauchsmaterialien ist.

2. Verfahren zur Bestellung von Ersatzteilen und/oder Dienstleistungen zur Wartung eines Gerätes und/oder zur Bestellung von einem Gerät zugeordneten Verbrauchsmaterialien, nach Anspruch 1, **dadurch gekennzeichnet, dass** die RFID-Labels, die Ersatzteilen des Gerätes, Dienstleistungen zur Wartung des Gerätes oder dem Gerät zugeordneten Verbrauchsmaterialien entsprechen, nicht nur am Gerät direkt, sondern zusätzlich oder alternativ dazu an einer Karte oder an einem anderen geeigneten Informationsträger angebracht sind.

3. Verfahren zur Bestellung von Ersatzteilen und/oder Dienstleistungen zur Wartung eines Gerätes und/oder zur Bestellung von einem Gerät zugeordneten Verbrauchsmaterialien, nach Anspruch 2, **dadurch gekennzeichnet, dass** die Karte als Club-Karte ausgeführt ist, die der Benutzer beim Kauf des Gerätes vom Lieferanten erhält, wobei anhand der von dem zumindest einen auf der Karte angebrachten RFID-Label übertragenen Informationen der Benutzer identifiziert wird und seine optional abgelegten Konto- oder Kreditkartendaten zur Bezahlung der bestellten Verbrauchsmaterialien verwendet werden können.

4. Verfahren zur Bestellung von Ersatzteilen und/oder Dienstleistungen zur Wartung eines Gerätes und/oder zur Bestellung von einem Gerät zugeordneten Verbrauchsmaterialien, nach Anspruch 1 oder 2, **dadurch gekennzeichnet, dass** in den RFID-Labeln, die Ersatzteilen des Gerätes, Dienstleistungen zur Wartung des Gerätes oder dem Gerät zugeordneten Verbrauchsmaterialien entsprechen, eine Geräteseriennummer enthalten ist, wodurch der Benutzer des Gerätes und/oder die Art der geeigneten Verbrauchsmaterialien bzw. Ersatzteile eindeutig identifizierbar sind, wobei die dem Internetlink entsprechende Internetseite die letzten Bestellungen oder die bestellbaren Verbrauchsmaterialien anzeigt.

5. Verfahren zur Bestellung von Ersatzteilen und/oder Dienstleistungen zur Wartung eines Gerätes und/oder zur Bestellung von einem Gerät zugeordneten Verbrauchsmaterialien, nach Anspruch 4, **dadurch gekennzeichnet, dass** die Anschrift des Benutzers anhand der Geräteseriennummer ermittelt wird.

6. Verfahren zur Bestellung von Ersatzteilen und/oder Dienstleistungen zur Wartung eines Gerätes und/oder zur Bestellung von einem Gerät zugeordneten Verbrauchsmaterialien, nach Anspruch 4 oder 5, **dadurch gekennzeichnet, dass** nach der Bestellung von Verbrauchsmaterialien oder Ersatzteilen mittels der Internet-Verbindung zwischen dem Benutzer und dem Hersteller oder Lieferanten der Benutzer über diese Verbindung online bezahlen kann, wobei der Benutzer seine Bank- und/oder Kreditkarteninformationen einmal online oder beim Kauf des Geräts angibt.

7. Verfahren zur Bestellung von Ersatzteilen und/oder Dienstleistungen zur Wartung eines Gerätes und/oder zur Bestellung von einem Gerät zugeordneten Verbrauchsmaterialien, nach einem der vorangehenden Ansprüche, **dadurch gekennzeichnet, dass** für den Fall der Bestellung von Ersatzteilen eines Gerätes auf den Bauteilen eines Gerätes, welche einem erhöhten Verschleiß ausgesetzt sind, RFID-Labels angebracht werden, durch deren Aktivierung eine Seriennummer des benötigten Ersatzteils über eine Online-Verbindung mittels eines zur mobilen Kommunikation geeigneten RFID-fähigen Gerätes des Benutzers dem Hersteller oder Lieferanten mitgeteilt wird.

8. Verfahren zur Bestellung von Ersatzteilen und/oder Dienstleistungen zur Wartung eines Gerätes und/oder zur Bestellung von einem Gerät zugeordneten Verbrauchsmaterialien, nach einem der vorangehenden Ansprüche, **dadurch gekennzeichnet, dass** als zur mobilen Kommunikation geeignetes RFID-fähiges Gerät ein RFID-fähiges Mobiltelefon verwendet wird.

9. Verfahren zur Bestellung von Ersatzteilen und/oder Dienstleistungen zur Wartung eines Gerätes und/oder zur Bestellung von einem Gerät zugeordneten Verbrauchsmaterialien, nach einem der vorangehenden Ansprüche, **dadurch gekennzeichnet, dass** die RFID-Labels NFC-Labels sind.

## Geänderte Patentansprüche

### Geänderte Patentansprüche gemäss Regel 137(2) EPÜ.

**1.** Verfahren zur Bestellung von Ersatzteilen und/oder Dienstleistungen zur Wartung eines Gerätes und/oder zur Bestellung von einem Gerät zugeordneten Verbrauchsmaterialien, wobei gerät- und/oder verbrauchsmaterialienspezifische Informationen mittels eines RFID-Labels in Form eines automatisch oder nach einer Bestätigung des Benutzers in einem zur mobilen Kommunikation geeigneten RFID-fähigen Gerät des Benutzers aktivierbaren Internetlinks an ein zur mobilen Kommunikation geeignetes RFID-fähiges Gerät übermittelt werden, wobei die Inhalte der dem Internetlink entsprechenden Internetseite von den vom RFID-Label gelieferten Informationen abhängen und eine Online-Bestellung von Ersatzteilen und/oder Dienstleistungen zur Wartung eines Gerätes und/oder die Online-Bestellung von einem Gerät zugeordneten Verbrauchsmaterialien ermöglichen, wobei die dem Internetlink entsprechende Internetseite eine Internetseite des Herstellers des Gerätes bzw. des für die Wartung zuständigen Betriebs bzw. des Lieferanten der Ersatzteile oder Verbrauchsmaterialien ist, **dadurch gekennzeichnet, dass** die RFID-Labels, die Ersatzteilen des Gerätes, Dienstleistungen zur Wartung des Gerätes oder dem Gerät zugeordneten Verbrauchsmaterialien entsprechen, nicht nur am Gerät direkt, sondern zusätzlich oder alternativ dazu an einer Karte oder an einem anderen geeigneten Informationsträger angebracht sind, wobei die Karte als Club-Karte ausgeführt ist, die der Benutzer beim Kauf des Gerätes vom Lieferanten erhält, wobei anhand der von dem zumindest einen auf der Karte angebrachten RFID-Label übertragenen Informationen der Benutzer identifiziert wird und seine optional abgelegten Konto- oder Kreditkartendaten zur Bezahlung der bestellten Verbrauchsmaterialien verwendet werden können.

**2.** Verfahren zur Bestellung von Ersatzteilen und/oder Dienstleistungen zur Wartung eines Gerätes und/oder zur Bestellung von einem Gerät zugeordneten Verbrauchsmaterialien, nach Anspruch 1, **dadurch gekennzeichnet, dass** in den RFID-Labeln, die Ersatzteilen des Gerätes, Dienstleistungen zur Wartung des Gerätes oder dem Gerät zugeordneten Verbrauchsmaterialien entsprechen, eine Geräteseriennummer enthalten ist, wodurch der Benutzer des Gerätes und/oder die Art der geeigneten Verbrauchsmaterialien bzw. Ersatzteile eindeutig identifizierbar sind, wobei die dem Internetlink entsprechende Internetseite die letzten Bestellungen oder die bestellbaren Verbrauchsmaterialien anzeigt.

**3.** Verfahren zur Bestellung von Ersatzteilen und/oder Dienstleistungen zur Wartung eines Gerätes und/oder zur Bestellung von einem Gerät zugeordneten Verbrauchsmaterialien, nach Anspruch 2, **dadurch gekennzeichnet, dass** die Anschrift des Benutzers anhand der Geräteseriennummer ermittelt wird.

**4.** Verfahren zur Bestellung von Ersatzteilen und/oder Dienstleistungen zur Wartung eines Gerätes und/oder zur Bestellung von einem Gerät zugeordneten Verbrauchsmaterialien, nach Anspruch 2 oder 3, **dadurch gekennzeichnet, dass** nach der Bestellung von Verbrauchsmaterialien oder Ersatzteilen mittels der Internet-Verbindung zwischen dem Benutzer und dem Hersteller oder Lieferanten der Benutzer über diese Verbindung online bezahlen kann, wobei der Benutzer seine Bank- und/oder Kreditkarteninformationen einmal online oder beim Kauf des Geräts angibt.

**5.** Verfahren zur Bestellung von Ersatzteilen und/oder Dienstleistungen zur Wartung eines Gerätes und/oder zur Bestellung von einem Gerät zugeordneten Verbrauchsmaterialien, nach einem der vorangehenden Ansprüche, **dadurch gekennzeichnet, dass** für den Fall der Bestellung von Ersatzteilen eines Gerätes auf den Bauteilen eines Gerätes, welche einem erhöhten Verschleiß ausgesetzt sind, RFID-Labels angebracht werden, durch deren Aktivierung eine Seriennummer des benötigten Ersatzteils über eine Online-Verbindung mittels eines zur mobilen Kommunikation geeigneten RFID-fähigen Gerätes des Benutzers dem Hersteller oder Lieferanten mitgeteilt wird.

**6.** Verfahren zur Bestellung von Ersatzteilen und/oder Dienstleistungen zur Wartung eines Gerätes und/oder zur Bestellung von einem Gerät zugeordneten Verbrauchsmaterialien, nach einem der vorangehenden Ansprüche, **dadurch gekennzeichnet, dass** als zur mobilen Kommunikation geeignetes RFID-fähiges Gerät ein RFID-fähiges Mobiltelefon verwendet wird.

**7.** Verfahren zur Bestellung von Ersatzteilen und/oder Dienstleistungen zur Wartung eines Gerätes und/oder zur Bestellung von einem Gerät zugeordneten Verbrauchsmaterialien, nach einem der vorangehenden Ansprüche, **dadurch gekennzeichnet, dass** die RFID-Labels NFC-Labels sind.
